# EUROPÄISCHE PATENTSCHRIFT

(11) **EP 3 297 871 B1**
(45) Veröffentlichungstag und Bekanntmachung des Hinweises auf die Patenterteilung: **08.05.2019**
(21) Anmeldenummer: 16724021.7
(22) Anmeldetag: 18.05.2016
(51) Int. Cl.: B60R 13/08

(54) **STIRNWAND**
FIREWALL
PAROI DE SÉPARATION

(30) Priorität: 19.05.2015 DE 102015209105
(43) Veröffentlichungstag der Anmeldung: 28.03.2018
(73) Patentinhaber: Adler Pelzer Holding GmbH, 58099 Hagen (DE)
(72) Erfinder: NICOLAI, Norbert, 46514 Schermbeck-Gahlen (DE); SCHULZE, Volkmar, 84069 Schierling (DE); SCHNEIDER, Marco, 45239 Essen (DE); MORRIS-KIRBY, Rod, Padstow Cornwall PL28 8AU (GB)
(74) Vertreter: dompatent von Kreisler Selting Werner - Partnerschaft von Patent- und Rechtsanwälten mbB
(86) Internationale Anmeldenummer: PCT/EP2016/061126
(87) Internationale Veröffentlichungsnummer: WO 2016/184906

(56) Entgegenhaltungen:
- US-A1- 2013 112 499

## Beschreibung

Gegenstand der Erfindung ist eine Stirnwand eines Kraftfahrzeuges sowie dessen Verwendung. Die Erfindung umfasst eine Stirnwand gemäß Anspruch 1 und dessen Verwendung gemäß Anspruch 8.

Bekannt sind schallabsorbierende Materialien (Absorber), welche durch eine zusätzliche Strömungsschicht vollumfänglich (beidseitig) oder nur auf einer Seite den Absorber bedecken; und damit die akustischen Eigenschaften verbessern. US2013/0112499 A1 offenbart eine Stirnwand gemäß dem Oberbegriff des Anspruchs 1.

Abhängig vom verwendeten Material können solche Bauteile auch einen Wärmeschutz bieten.

In DE 10 2004 050 649 A1 wird ein schallabsorbierendes Hitzeschild mit einem Trägerblech, das eine akustisch und thermisch wirksame Isolationsschicht trägt, beschrieben. Der Hitzeschild weist eine auf einer während dessen Verwendung einer Schallquelle zugewandten Seite der Isolationsschicht angeordnete Schutzfolie auf, die eine Mikrolochung aufweist.

Eine wärme- und schalldämmende Verkleidung für den Motorraum von Kraftfahrzeugen, die in DE 101 43 167 A1 beschrieben wird, besteht aus einem motorseitigen mikrogelochten Hitzereflektor, einer damit in Kontakt befindlichen Polyurethan-Schaumstoffschicht, die auf der Motorseite mit einem bei 200°C, insbesondere bei 150°C drei Wochen Dauertemperatur-belastbarem duroplastischen Material getränkt ist und einer damit in Kontakt befindlichen, der Motorseite abgewandten Deckschicht.

Die Herstellung von mikroperforierten Folien, insbesondere Metallfolien ist seit langem bekannt. Beispielsweise sei auf US 7,838,125 B2 verwiesen, in der eine spezielle Ausführungsform einer mikroperforierten Metallfolie beschrieben ist. Hier wird beschrieben, dass durch Nadelstanzung die Metallfolie derart verformt wird, dass entgegen der Nadeleinstichrichtung ein gegenüber der mittleren Folienlage erhöhter Krater ausgebildet wird, dessen unterer Rand bei dem Durchstich der Nadel ausfranzt.

Bekannt sind Aufbauten, bei denen als Strömungsschicht verpresste Vliese zum Einsatz kommen. In WO 98/ 18656 wird ein mehrlagiger Aufbau beschrieben, welcher aus mindestens einer poröse Federschicht und einer mikroporösen Versteifungsschicht besteht, wobei diese Schicht einen Strömungswiderstand von R = 900 Nsm⁻³ bis 2000 Nsm⁻³ besitzt. In einer besonderen Ausführung besteht zwischen der Federschicht und der Karosserie ein Luftspalt.

In der WO 2004/107314 A1 wird ein Schallabsorber-Aufbau aus zwei miteinander verbundenen thermoplastisch und/oder duroplastisch gebundenen Textilfaservliesen mit unterschiedlichen Dicken, Dichten, Flächengewichten und Strömungswiderständen der Schichten beschrieben. Der Aufbau weist eine Metallschicht auf und ist daher insgesamt nicht strömungsoffen.

DE 10 2004 053 751 A1 beschreibt ein Verkleidungsteil für ein Fahrzeug, insbesondere eine Unterbodenverkleidung. Diese besitzt eine poröse Mittelschicht und mindestens eine Deckschicht auf jeder Seite, wobei die poröse Mittelschicht derart aufgebaut ist, dass sie akustische Transparenz oder akustisch absorbierende Wirksamkeit besitzt. Dabei kann die akustisch absorbierende poröse Mittelschicht ein- oder beidseitig mit einer oder mehreren akustisch transparenten beziehungsweise absorbierenden Deckschichten belegt sein.

Für den Bereich im Kraftfahrzeuginnenraum sind Aufbauten mit einem Absorber und einer mikrogelochten Polymerfolie bekannt. In EP 1 101 218 B1 wird eine mikroperforierte Polymerfolie zur Verwendung in einem Schallabsorber beschrieben, die mit einer Polymerfolie einer definierten Dicke und mehreren Mikroperforationen ausgebildet ist, wobei die Mikroperforationen jeweils einen engsten Durchmesser kleiner als die Foliendicke aufweisen und einen breitesten Durchmesser, der größer als 125% des engsten Durchmessers ist.

Damit wird eine mikroperforierte Kunststofffolie mit einer definierten Lochgeometrie in Abhängigkeit der Foliendicke beschrieben. Insbesondere werden hier Perforierungskanäle, Säulen oder trichterförmiger Art mit variablen Durchmessern beschrieben.

In DE 10 2010 035 431 A1 wird ein Aufbau beschrieben, wo ein Absorbermaterial vollständig von einer Strömungsschicht, hier einer mikrogelochten Folie eingeschlossen ist. Im dargestellten Aufbau ist das eingeschlossene Absorber-material lose und nicht verformt.

In DE 10 2012 216 500 A1 ist ein mehrlagiger gelochter Schallabsorber mit einer mikroperforierten Kunststofffolie, einer Kleberschicht und einem thermoverformbaren Absorber, welcher eine Schaumstofflage, ein Fasergewebe oder eine Faservlieslage umfasst, beschrieben. Berücksichtig wird in dieser Schrift der Einfluss der Verarbeitung auf die Strömungsschicht, welche durch Relaxation und Verkleben ihren Strömungswiderstand ändert.

Allgemein bekannt ist, dass durch Nanofaserbeschichtung die akustische Wirkung von zum Beispiel Vliesmaterialien beeinflußt werden kann (A. Rabbi u.a.; Incorporation of Nanofiber Layers in Nonwoven Materials for Improving Their Acoustic Properties; Journal of Engineered Fibers and Fabrics, Volume 8, Issue 4 - 2013 auch C. Adlhart; Dünne Fasern-grosse Wirkung: Mit Elektrospinning zu neuen Produkten; Textil Plus 05/06-2014).

Alle genannten Strömungsschichten bestehen aus Naturfaser-, Kunststoff- oder Bikomponenten (BiCo)-Material und sind damit brennbar; beziehungsweise die nichtbrennbaren Lösungen aus Metall oder anorganischen Material besitzen ein deutlich höheres Gewicht. Entsprechend dem Aufbau der Strömungsschicht liegt eine unterschiedliche Größe und Verteilung der Poren vor. In Abhängigkeit der Herstellung der Strömungsschicht ergeben sich bei Faserbauteilen immer eine Streuung des Flächengewichtes und damit eine Verteilung des Strömungswiderstandes.

Flächig konturierte Bauteile auf der Basis von schallabsorbierenden Materialien, die mit einer Nanofaser enthaltenden Schicht versehen sind, sind beispielhaft in DE 20 2008 025 840 A1, DE 20 2009 044 649 A1, US 2014/0224576 A1, US 2008/0173497 A1, WO 2014/111068 A2, WO 2014/111067 A2, US 2013/0112499 A1, US 2013/0115837 A1, US 2014/0216847 A1, US 2010/0170746 A1, DE 600 21 177 T2 und DE 10 2010 033 959 A1 bekannt.

Die Aufgabe der vorliegenden Erfindung gegenüber dem vorgenannten Stand der Technik besteht darin, ein dreidimensional verformtes Bauteil nämlich eine absorptive Stirnwand direkt mit einer Strömungsschicht aus Nanofasern zu beaufschlagen.

Die damit gestellte Aufgabe wird gelöst, durch einen breitbandigen Schallabsorber nämlich einer Stirnwand mit hoher akustischer Isolation mit den Merkmalen des Anspruchs 1. Bevorzugte Ausführungsformen sind den davon abhängigen Ansprüchen sowie den Verwendungsansprüchen zu entnehmen.

Die vorliegende Erfindung beschreibt akustische Bauteile nämlich Stirnwände, bestehend aus einem absorptiven Material, gegebenenfalls in einem Schichtverbund, und gegebenenfalls Träger- sowie Zwischenschichten, welche mit einer sehr leichten, akustisch homogenen Strömungsschicht, insbesondere bestehend aus Nanofasern, vollständig, das heißt beidseitig oder partiell, das heißt einseitig und/oder auf ausgewählten Oberflächenbereichen einer oder beider Seiten des schallabsorbierenden Materials bedeckt sind. Die Nanofaserschicht (Strömungsschicht) kann hierbei zum einen direkt auf das Absorber-material (schallabsorbierendes Material) aufgebracht sein, zum anderen unter Anwendung einer Trägerschicht. Auch kann sich diese Nanofaserschicht zwischen unterschiedlichen Absorber-Material- und Träger-Schichten befinden.

In einer wesentlichen Ausführung ist der Absorber der Stirnwand aus Schaum, gebundenen Fasern, gebundenen Schaumpartikeln oder einer Mischung derer, gegebenenfalls in einem Schichtverbund, dreidimensional entsprechend der Bauteilkontur verformt und einseitig oder vollständig über die gesamte Oberfläche mit Nanofasern bedeckt.

In einer weiteren bevorzugten Ausführung ist das Absorbermaterial nicht gebunden und befindet sich zwischen zwei sich randumlaufend berührenden textilen strömungsoffenen Trägern mit einer Nanofasern enthaltenden Beschichtung.

Für den Einsatz zwischen zwei Wänden ist die strömungsoffene Trägerschicht so geformt, dass mindestens auf einer Seite, bevorzugt jedoch auf beiden Seiten ein Wandabstand entsteht. Dieser liegt größtenteils im Bereich von 1 mm (reiner Luftspalt) und/oder etwa Dreiviertel des verfügbaren Bauraums. Gegebenenfalls kann das leichte akustische Bauteil den gesamten Bauraum ausfüllen.

In den vorher genannten Ausführungen ist die Beschichtung (die Nanofaserschicht) so definiert, dass über die Fläche ein gleichmäßiges oder definiert unterschiedliches das heißt partiell über die Fläche ungleiches Flächengewicht, und damit lokal unterschiedliche Strömungswiderstände, entstehen.

Der größte Anteil an akustisch wirksamen Bauteilen in Fahrzeugen ist flächig, meist konturiert flächig, besitzt eine dreidimensionale und im Wesentlichen flache Form und liegt an der Karosserie an, so dass in diesen Fällen eine partielle Beschichtung mit Nanofasern voll zweckerfüllend ist. Für Bauteile in einer Kavität ist natürlich eine vollflächige, das heißt beidseitige Nanofaserbeschichtung auch sinnvoll.

Als loses sowie auch gebundenes/geformtes Füllmaterial werden die bekannten Absorbermaterialien eingesetzt:
synthetische Fasern, insbesondere Polyesterfasern, Polyamidfasern, insbesondere Nylon 6 und/oder Nylon 66; Polyolefinfasern, insbesondere PP und/oder PE; Acrylfasern sowie deren Fasergemische einschließlich Bikomponentenfasern und Multikomponentenfasern und/oder Gemische aus Naturfasern, insbesondere Rohbaumwoll-, Hanf-, Cocos-, Kenaf-, Jute- und/oder Sisalfasern mit den vorgenannten synthetischen Fasern; tierische, metallische oder anorganische Fasern als auch Materialien, die hauptsächlich als Abstandshalter fungieren (Abstandsgewirke, Partikelschaum usw.); desweitern PUR-Schaumstoff.

Als Platinenmaterial wie auch als Material für Formteile sind bis auf die Materialien, die als Abstandshalter fungieren, die gleichen Stoffe einsetzbar, die jedoch über Bindematerialien (BiCo-Fasern, Kunststoffpulver) oder mechanische Verfestigung (nadeln, nähen) gebunden sind.

Als Trägerschicht werden strömungsoffene textile Flächengebilde oder räumlich textile Gebilde, wie beispielsweise Gewebe, Gewirke, Gestricke, Geflechte, Nähgewirke, Vliesstoffe und Filze sowie die räumlichen textilen Gebilde (Körpergebilde) wie beispielsweise textile Schläuche eingesetzt.

Die Materialien für textile Träger sind abhängig vom Einsatzgebiet: Kunststoffe (PA, PP, PET, Aramide, etc.); Naturfasern (Leinen, Baumwolle etc.) anorganische und metallische Fasern (Glas, Carbon, Aluminium, etc.).

Als Nanofasern steht eine breite Palette von Materialien zur Verfügung. Nahezu alle Kunststoffe können eingesetzt werden; sowie Naturmaterialien-basierte Fasern wie auch metallische und anorganische Fasern. Nanofasern im Sinne der vorliegenden Erfindung umfassen insbesondere Fasern mit einem Faserdurchmesser kleiner als 900 Nanometer (nm), vorzugsweise im Bereich von 50 bis 800 nm, insbesondere bevorzugt 75 nm bis 300 nm.

Nanofasern werden erfindungsgemäß vorzugsweise in beziehungsweise auf einem Verbundvlies und auf dreidimensional vorverformten Bauteilen verarbeitet.

Für Synthesefaservliese bedeutet dies, dass sie bereits bei der Herstellung, beispielsweise durch Elektrospinnen, mit anderen Verfahren, wie Schmelzspinnen und anderen, kombiniert werden und so einen Verbund mit Mikrofasern eingehen können. Darüber hinaus können auch noch Stütz- oder Schutzvliese additiv zu dem Mikro-Nano-Faserverbund hinzukommen, so dass ein Verbundvlies entsteht. Bei Glasfaservliesen ist das Düsenblasverfahren zur Herstellung von Luftfiltervliesen mit nanoskaligen Fasern sehr verbreitet.

Das Flächengewicht der Nanofasern beträgt bei den beanspruchten akustischen Bauteilen nämlich der Stirnwand vorzugsweise 0,01 g/m² bis 15 g/m², insbesondere 0,2 g/m² bis 1,5 g/m², bezogen auf die Strömungsschicht.

Der Strömungswiderstand der Strömungsschicht beträgt vorzugsweise 500 Ns/m³ bis 100.000 Ns/m³, bevorzugt 3000 Ns/m³ bis 20.000 Ns/m³. Für Bauteile mit vollständiger Flächenbedeckung sollen die Strömungswiderstände im oberen Bereich liegen und können für jede Seite gleich oder unterschiedlich sein.

Über die Größe des Strömungswiderstandes kann das Verhältnis von absorptiver zu isolierender Wirkung des Bauteils eingestellt werden.

Die vorliegende Erfindung verbessert die Homogenität der Porenverteilung dadurch, dass sie Nanofasern zur Bildung der Strömungsschicht nutzt und dadurch die Skala zur Beschreibung sowohl der Größe der Hohlräume als auch ihrer Anordnung zueinander zu kleineren Dimensionen verschiebt. Ist der spezifische Strömungswiderstand der Strömungsschicht zu hoch, kann der Schall nicht in den rückwärtigen Absorber eindringen und wird im weiten Bereich reflektiert. Das Bauteil verhält sich im Wesentlichen wie ein Isolator. Ist der Strömungswiderstand der Strömungsschicht sehr gering (offen), wirkt im Wesentlichen nur der Absorber.

### Ausführungsbeispiele:

### Beispiel 1 / Vergleichsbeispiel 1:

Die Anwendung der Erfindung soll an erfindungsgemäßen Bauteilen dargestellt werden.

In einer ersten Anwendung wurde eine Stirnwand des Standes der Technik für ein Luxusfahrzeug mit einem Feder-Masse-Aufbau bestehend aus einem handelsüblichen elastischen Schaum und einer handelsüblichen thermoplastischen Schwerschicht mit einem mittleren Flächengewicht von 4 kg/m² gegen einen sogenannten Dual Impedance Aufbau getauscht.

Der Dual Impedance Aufbau besteht aus einem im Faser-Injektions-Verfahren hergestellten Kern aus einem Faser-Gemisch mit 20 Gew.% PET-BiCo-Fasern, 40 Gew.% Baumwoll-Recyclingfasern und 40 Gew.% PET-Fasern. Das Trägervlies besteht aus einem 40 g/m² PET-Vlies und ist gleichmäßig mit 0,8 g/m² PA-Nanofasern ( Endlosfasern ) beschichtet. Das Trägervlies mit Nanofasern (der Strömungsschicht) wurden mittels eines handelsüblichen PE-Klebers 20 g/m² auf den Faserabsorber bei einer Temperatur oberhalb der Schmelztemperatur des PE's aufgepresst. Die so hergestellte Stirnwand war ca. 5 kg leichter als die Serienstirnwand und in einem Rating innerhalb eines Fahrversuches nur 0,5 Punkte in der subjektiven Beurteilung schlechter als die Serienstirnwand. Mit einer lokal begrenzten Massebelegung konnte bei einer Gewichtseinsparung von 3 kg die gleiche akustische Wirkung erzielt werden.

### Beispiel 2:

In einer weiteren Anwendung wurde ein im Faser-Injektions-Verfahren hergestellter dreidimensional geformter Absorber bestehend aus 25 Gew.% PET-BiCo-Fasern, 40 Gew.% Baumwoll-Recyclingfasern und 35 Gew.% PET-Fasern, direkt einseitig mit einer 0,6 g/m² PA-Nanofaserbeschichtung, der Strömungsschicht, beaufschlagt.

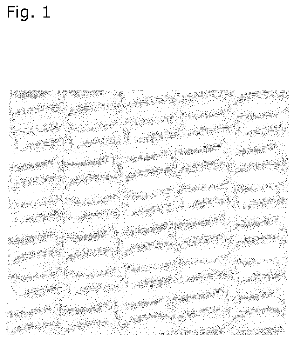

## Patentansprüche

1. Dreidimensional verformte, akustisch wirksame Stirnwand eines Kraftfahrzeuges umfassend wenigstens einen dreidimensional verformten, ein oder mehrlagigen Absorber, der mindestens auf einer flächigen Seite von einer Strömungsschicht vollflächig oder partiell bedeckt ist, die direkt auf dem Absorber aufgebracht ist und aus Nanofasern besteht, **dadurch gekennzeichnet, dass** der Strömungswiderstand der Strömungsschicht(en) gleich oder lokal definiert verschieden ist, die Strömungsschicht zwischen mehreren losen aufeinanderliegenden oder verpressten Schichten und dem Absorber angeordnet ist, die Dicke der Stirnwand über ihre gesamte Fläche gleich oder lokal definiert unterschiedlich ist, die Nanofaserschicht einen über das Bauteil lokal definiert unterschiedlichen Strömungswiderstand aufweist und die Stirnwand weiterhin ein strömungsoffenes Trägermaterial umfasst, wobei der strömungsoffene Träger mit dem Absorber und der Strömungsschicht mehrere, lose aufeinanderliegende oder verpresste Schichten umfasst.

2. Stirnwand nach Anspruch 1, **dadurch gekennzeichnet, dass** das Absorber-Material auf beiden flächigen Seiten vollflächig oder partiell mit der Strömungsschicht bedeckt ist.

3. Stirnwand nach Anspruch 1 oder 2, **dadurch gekennzeichnet, dass** sie einen Schichtverbund aus mehreren, insbesondere 2 bis 5, Lagen des Absorbers und der Strömungsschicht umfasst.

4. Stirnwand nach einem der Ansprüche 1 bis 3, **dadurch gekennzeichnet, dass** der Strömungswiderstand der Strömungsschicht(en) jeweils 500 Ns/m³ bis 100000 Ns/m³ bevorzugt 3000 Ns/m³ bis 20000 Ns/m³ beträgt.

5. Stirnwand nach einem der Ansprüche 1 bis 4, **dadurch gekennzeichnet, dass** die Strömungsschicht auf dem strömungsoffenen Träger, der sich auf dem Absorber befindet und/oder als Ummantelung fungiert, einseitig aufgebracht ist.

6. Stirnwand nach einem der Ansprüche 1 bis 5, **dadurch gekennzeichnet, dass** der strömungsoffene Träger mit dem Absorber und der Strömungsschicht 3 bis 7 lose aufeinanderliegende oder verpresste Schichten umfasst.

7. Stirnwand nach einem der Ansprüche 1 bis 6, **dadurch gekennzeichnet, dass** die Nanofaserschicht einen über das Bauteil gleichmäßigen Strömungswiderstand aufweist.

8. Verwendung einer Stirnwand nach einem der Ansprüche 1 bis 7 in einem Abstand zu einer festen Wand.

9. Verwendung einer Stirnwand nach einem der Ansprüche 1 bis 7 in einem Abstand zu einem angrenzenden Bauteil.

## Claims

1. A three-dimensionally shaped acoustically effective firewall of a motor vehicle comprising at least one three-dimensionally shaped absorber with one or more layers that is covered on at least one major surface thereof by a flow layer on the entire surface or partially, which flow layer is directly applied to the absorber and consists of nanofibers, **characterized in that** the flow resistance of the flow layer(s) is equal or different in a locally defined way, said flow layer is sandwiched between several loosely stacked or compressed layers and said absorber, the thickness of said firewall is equal throughout its area or different in a locally defined way, said nanofiber layer has a flow resistance that is different in a locally defined way over the component, the firewall further comprises a support material open to flow, wherein said support open to flow with the absorber and the flow layer comprises several loosely stacked or compressed layers.

2. The firewall according to claim 1, **characterized in that** said absorber material is covered on both major surfaces on the entire surface or partially with said flow layer.

3. The firewall according to claim 1 or 2, **characterized by** comprising a layer composite of several, especially from 2 to 5, layers of the absorber and of the flow layer.

4. The firewall according to any of claims 1 to 3, **characterized in that** the flow resistance of the flow layer(s) is respectively from 500 Ns/m³ to 100,000 Ns/m³, preferably from 3,000 Ns/m³ to 20,000 Ns/m³.

5. The firewall according to any of claims 1 to 4, **characterized in that** said flow layer is applied to one side of said support open to flow, which is provided on the absorber and/or functions as a coating.

6. The firewall according to any of claims 1 to 5, **characterized in that** said support open to flow with the absorber and the flow layer comprises from 3 to 7 loosely stacked or compressed layers.

7. The firewall according to any of claims 1 to 6, **characterized in that** said nanofiber layer has a flow resistance that is uniform over the component.

8. Use of a firewall according to any of claims 1 to 7 at a distance to a solid wall.

9. Use of a firewall according to any of claims 1 to 7 at a distance to an adjacent component.

## Revendications

1. Paroi de séparation à effet acoustique, façonnée sous une forme tridimensionnelle, d'un véhicule automobile, comprenant au moins un absorbeur à une ou plusieurs couches, façonné sous une forme tridimensionnelle, qui est recouvert sur au moins une face plane par une couche d'écoulement, sur la totalité ou une partie de la surface, qui est appliquée directement sur l'absorbeur et est constituée de nanofibres, **caractérisée en ce que** la résistance à l'écoulement de la/des couche(s) d'écoulement est identique ou définie localement avec des valeurs différentes, que la couche d'écoulement est disposée entre plusieurs couches, superposées librement ou comprimées, et l'absorbeur, que l'épaisseur de la paroi de séparation, sur la totalité de sa surface, est la même ou est définie localement avec des valeurs différentes, que la couche de nanofibres présente une résistance à l'écoulement définie localement avec des valeurs différentes à travers le composant, et que la paroi de séparation comprend en outre un matériau support ouvert à l'écoulement, le support ouvert à l'écoulement comprenant, avec l'absorbeur et la couche d'écoulement, plusieurs couches superposées librement ou comprimées.

2. Paroi de séparation selon la revendication 1, **caractérisée en ce que** le matériau absorbeur est recouvert avec la couche d'écoulement sur les deux faces planes, sur la totalité ou une partie de la surface.

3. Paroi de séparation selon la revendication 1 ou 2, **caractérisée en ce qu'**elle comprend une structure stratifiée formée de plusieurs couches, en particulier de 2 à 5 couches, de l'absorbeur et de la couche d'écoulement.

4. Paroi de séparation selon l'une des revendications 1 à 3, **caractérisée en ce que** la résistance à l'écoulement de la/des couche(s) d'écoulement est respectivement de 500 Ns/m³ à 100 000 Ns/m³, de préférence de 3 000 Ns/m³ à 20 000 Ns/m³.

5. Paroi de séparation selon l'une des revendications 1 à 4, **caractérisée en ce que** la couche d'écoulement est appliquée sur une seule face du support ouvert à l'écoulement qui se trouve sur l'absorbeur et/ou remplit la fonction d'une gaine.

6. Paroi de séparation selon l'une des revendications 1 à 5, **caractérisée en ce que** le support ouvert à l'écoulement comprend, avec l'absorbeur et la couche d'écoulement, de 3 à 7 couches superposées librement ou comprimées.

7. Paroi de séparation selon l'une des revendications 1 à 6, **caractérisée en ce que** la couche de nanofibres présente une résistance à l'écoulement qui est uniforme à travers le composant.

8. Utilisation d'une paroi de séparation selon l'une des revendications 1 à 7, à distance d'une paroi fixe.

9. Utilisation d'une paroi de séparation selon l'une des revendications 1 à 7, à distance d'un composant adjacent.
